Europäisches Patentamt

European Patent Office

Office européen des brevets

(11) Publication number: **0 024 118**
**B1**

(12) **EUROPEAN PATENT SPECIFICATION**

(45) Date of publication of patent specification: 16.01.85

(51) Int. Cl.⁴: **F 16 B 25/00**

(21) Application number: 80302454.6

(22) Date of filing: 21.07.80

(54) **Self-drilling and self-threading screws.**

(30) Priority: 11.08.79 GB 7928017

(43) Date of publication of application:
25.02.81 Bulletin 81/08

(45) Publication of the grant of the patent:
16.01.85 Bulletin 85/03

(84) Designated Contracting States:
AT BE CH DE FR GB IT LI LU NL SE

(56) References cited:
DD-A- 90 460
DE-A- 65 519
DE-U-1 810 058
FR-A-1 118 057
FR-A-2 313 588
GB-A-1 120 991
US-A-2 232 336
US-A-2 293 930
US-A-2 302 675
US-A-4 028 987

DIN 7998
DIN 7970

(73) Proprietor: SELA FASTENERS LIMITED
153 Kirkstall Road
Leeds LS4 2AT (GB)

(72) Inventor: Gurney, Harold Keith
85 Hillcrest Rise
Leeds LS16 70G (GB)
Inventor: Lee, Terence
10 Newpark Close
Farsley Leeds LS28 5TS (GB)

(74) Representative: Higgins, Michael Roger et al
Marks & Clerk 57/60 Lincoln's Inn Fields
London WC2A 3LS (GB)

Courier Press, Leamington Spa, England.

## Description

The invention relates to self-drilling and self-threading screws for driving through a relatively weak packing material such as wood into a relatively strong metal member.

A typical self-drilling and self-threading screw incorporates a shank having a drill point at the leading end thereof, a thread along an intermediate portion thereof which is capable of tapping or forming a screw thread in a hole drilled by the drill point and a driving connection at the trailing end of the screw. The driving connection is normally associated with a head but headless screws with some other form of driving connection can be envisaged. The conventional drill screws are often used for example for securing thin metal sheets to more solid metal structures. For example roofing sheets can be secured to purlins in this way.

A problem arises when it is desired to space the thin sheet material from the purlin. To achieve this, it is often convenient to use packing material such as a wooden block between the thin metal sheet and the purlin.

This produces a problem for a conventional self-drilling and self-threading screw. As the screw thread passes through the wooden block, it produces and effective thread in the block which determines the rate of progress of the screw through the block in relation to the rotational driving speed and the pitch of the screw. When the drill point reaches the purlin, it is being urged by the wood block to advance into the purlin at this previously established rate of advance. A conventional drilling rate of advance is very much slower than this screw advance. The conflicting requirements of a fast advance associated with the screw thread and the required slow drilling advance often results in failure of the drilling and threading system. One failure mode is for the packing and metal sheet to rise up the screw thread towards the driving connection with a driving tool and falsely give the impression to the driving tool that the screw has been inserted to its full depth. This switches off the machine before the purlin has been drilled. Another possibility is that the impact of the drill point on the purlin in conjunction with the end load applied by an operator and the load associated with a sudden tendency to lift the packing material and metal sheet away from the purlin on the screw threads, damages the drill point to such an extent that it cannot drill.

The above problems are already well understood. One previously proposed solution to these problems is disclosd in U.K. patent specification 1093709. According to this known proposal, a self-drilling and self-threading screw is provided with outwardly extending ears between the drill point and the screw thread. As these ears advance into the softer material they ream it out to a diameter greater than the thread crest diameter so that there is no threaded engagement between the soft material and the screw thread. The strength of the ears should be such that they are broken off on contact with a steel purlin so that the drill screw operates in a conventional way in the purlin and after drilling produces its own screw thread. With such an arrangement, the strength of the ears is very critical and in practice some ears will break off too early leaving a screw thread in the spacer whereas on other ocassions the ears will not break off and result in either an oversized hole in the purlin or failure of the screw thread to penetrate the purlin. This problem is particularly serious with a thin purlin.

An object of the invention is to provide a self-drilling and self-threading screw which can operate through relatively weak packing material such as wood into relatively strong metal and can be made to operate reliably and effectively.

According to the present invention there is provided a self-drilling and self-threading screw for driving through a relatively weak packing material without tapping a thread into a relatively strong metal member where a thread is tapped comprising a shank having a drill point at the leading end thereof, a screw thread along an intermediate portion thereof, a rotary driving connection at the trailing end thereof, and a plurality of generally axial flutes extending along the threaded portion of the screw, characterised in that the flutes have a coarse helical pitch of opposite hand to that of the screw thread and that the depth of each flute is deeper than the root to crest dimension of the thread whereby, in use, the flutes and the thread become packed with said packing material to ream an unthreaded hole therethrough.

At first the screw thread tends to produce a corresponding female thread in the hole in the packing material. However, loose packing material generated by drilling this material tends to be pushed back along the or each flute but then fills and becomes closely packed in both the or each flute and the screw threads. The closely packed material tends to ream out or prevent formation of an effective female thread in the packing material. Thus, when the drill point arrives at the metal member, any remaining thread in the packing material is stripped before the drill point has been forced into the metal at too high a speed and effective drilling into the metal member takes place. The packing material is stripped from the thread in the screw by the metal member and the screw taps its own in the metal member in the usual way.

Preferably the thread has roots which are wider than the crests. The thread may have a wide flat root between adjacent raised portions and the width of the roots may be of the same order as the root width of the raised portions. These features are considered desirable in providing a screw which reliably fills its threads with loose packing material.

The thread may extend from adjacent the drill point to a position only part of the way towards the driving connection.

This arrangement ensures that a metal cladding sheet does not rise up to the driving connection of the screw on the screw thread before the screw has drilled into the purlin and secured the cladding sheet into position. The limited length of thread acts as a further safeguard against effective threaded engagement between the packing material and the screw. Similarly there may be an unthreaded portion between the drill point and the screw thread.

An embodiment of the invention will now be described by way of example only with reference to the accompanying drawings in which:

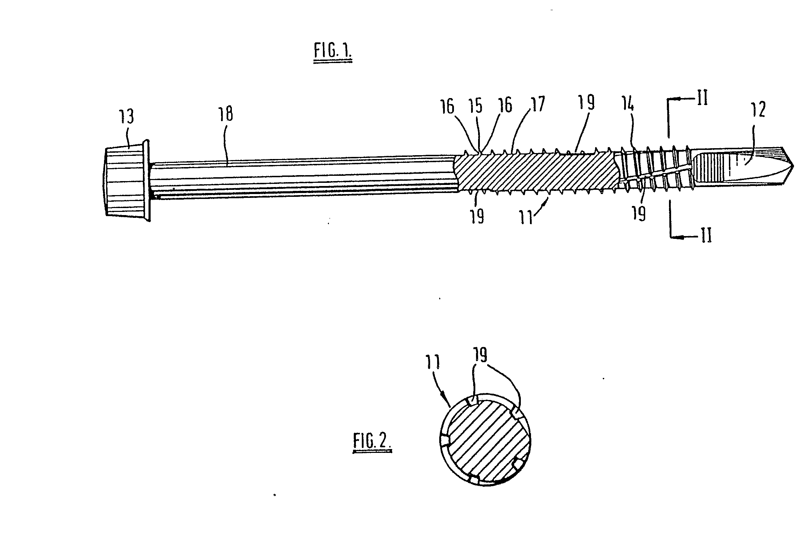

Figure 1 is a diagrammatic side elevation, partly in section, of a self-drilling and self-threading screw in accordance with the invention; and

Figure 2 is a cross section on line II—II of Figure 1.

The drill screw shown in the drawing incorporates a shank 11 with a conventional drill point 12 at its leading end and a driving connection provided by a head 13. Head 13 may be moulded from plastics material on to splayed out ends of the shank and may be of a kind specifically intended for driving a drill screw.

A portion of the shank extending back from the drill point 12 has a screw thread 14 rolled on to it. This thread is of the kind known as a Y-type thread. A Y-type thread is normally used in self-tapping applications and has sharply pointed crests 15 with narrow angle flanks 16 and with wide flat roots 17. In a Y-type thread, the roots 17 are approximately twice as wide as the raised portion of the thread and for the purposes of the invention the width of the root should preferably be at least of the same order as the width of the raised portion of thread. The thread extends from a position immediately behind the drill point 12 for a distance of about 30 mm along the shank towards the head 13. This leaves an unthreaded shank portion 18 adjacent to the head of a length which depends on the total length of the drill screw. Alternatively the thread may start some distance behind the drill point or may have a tapered lead in portion over the first few turns of thread.

The screw thread is interrupted by five generally longitudinally extending flutes 19. The flutes completely remove the full depth of the thread and in this example also extend further into the shank to a distance which is about 20% of the crest to root dimension of the thread. In practice, the flutes are in the form of a very coarse pitch left hand thread which may be about 20 to 40 times the pitch of the main thread.

The drill screw is intended primarily for holding one or more cladding sheets such as a thin steel roofing sheet onto a purlin or similar steel member and is particularly intended for use where the cladding panel is spaced from the purlin by a spacer block of timber or similar material or a sheet of insulating board. In practice, the drill point drills through a thin steel sheet and into the packing material. When the screw thread enters the packing, it tends to produce a mating female screw thread in the just-drilled hole. Thus a tendency develops for the screw to advance at a rate determined by its speed of rotation and the pitch of thread. This rate of advance through the packing material causes no difficulties because the comparatively soft packing material can be drilled at a rate of advance governed by the screw thread. As the drill point advances into the packing material, loose material tends to be fed back along the thread. The loose material tends to become wedged within the flutes 19 and is also driven into the parts of the screw thread between adjacent crests. The packing material becomes compressed very solidly and then fills up all or at least most of the screw thread. The continued rotation of the drill screw together with the normal axial load applied to it causes it to advance through the packing while the loose packing material causes the screw thread to act as a reamer and ream out the hole in the packing to approximately the crest diameter of the thread. This leaves either no female screw thread in the packing or at most only a residual amount of thread.

It follows as a result of this reaming action that the drill screw becomes capable of advancing at its own speed dependent on the end load without being governed by the rate of rotation and the pitch of the thread.

During the insertion of the screw, the point 12 eventually passes right through the packing material and comes into contact with the purlin or similar support. This is typically steel with a thickness of about 1.5 to 12.5 millimetres. A typical drill screw is capable of drilling through such a purlin provided it can advance slowly and such a slow advance is not hindered by the thread of the screw in the packing. This can be achieved only if the female thread in the packing has been completely or almost completely reamed out. Thus the drill point penetrates the purlin in the usual way. The screw then advances until the thread on the drill screw penetrates into and forms its own female thread within the purlin. The loose material packed in the threads, being far softer than the material of the purlin is removed from the leading threads by the thread-forming action. When the screw has been screwed into the purlin, the drill screw is firmly in position holding both the outer cladding sheet and the packing or insulation material between the outer sheet and the purlin in the required manner.

This contrasts with a conventional screw thread in which the engagement between the thread and the packing attempts to drive the drill point 12 into the purlin at too fast a speed which can cause severe damage to the drill point 12 so that it can never enter the purlin.

Typical packing materials with which the drill screw of the invention can be used successfully are timber and insulation board. However, the drill screw should also be useful with other packing materials which are comparatively soft as compared with the comparatively hard steel of a purlin.

There are two reasons for leaving the upper part 18 of the shank without any thread. One reason is that with a particularly thick packing member, the reduction of the length of thread within the packing reduces any residual thrust which might be generated by residual screw thread. Another reason is that it prevents outer cladding sheets from riding too far up the screw thread before the reaming action strips the threads formed initially in them.

With the drill screw shown in the drawings, it is possible to roll the flutes into the thread at the same time as producing the primary Y-type thread but as an alternative the flutes may be machined after the threads have been rolled. For the rolling operation one die of a die set produces the Y-type thread while the other die produces the flutes.

A further possible modification is that the depth of the screw thread may be reduced as the thread approaches the drill point. This can increase the tendency for the loose material to jam in the thread as the material only gradually comes into contact with the screw thread as the drill screw advances. If the thread near the drill point is an incompletely formed rolled thread, the roughness achieved in this way can be particularly valuable in tending to ream out any screw thread which might be formed in the packing.

## Claims

1. A self-drilling and self-threading screw for driving through a relatively weak packing material without tapping a thread into a relatively strong metal member where a thread is tapped comprising a shank (11) having a drill point (12) at the leading end thereof, a screw thread (14) along an intermediate portion thereof, a rotary driving connection (13) at the trailing end thereof, and a plurality of generally axial flutes (19) extending along the threaded portion of the screw, characterised in that the flutes (19) have a coarse helical pitch of opposite hand to that of the screw thread (14) and that the depth of each flute (19) is deeper than the root to crest dimension of the thread (14) whereby, in use, the flutes (19) and the thread (14) become packed with said packing material to ream an unthreaded hole therethrough.

2. A self-drilling and self-threading screw as claimed in Claim 1, further characterised in that the screw thread (14) is of a form which has roots (17) which are wider than the crests (15).

3. A self-drilling and self-threading screw as claimed in either one of the Claims 1 or 2 further characterised in that the thread (14) has wide flat roots (17) between raised portions of a width which is of the same order as the width of the raised portion of the thread (14).

4. A self-drilling and self-threading screw as claimed in any one of the preceding claims further characterised in that the screw thread (14) extends only part of the way towards the driving connection (13).

## Patentansprüche

1. Selbstbohrende und gewindeschneidende Schraube zum Hindurchtreiben durch ein relatic schwaches Verpackungsmaterial ohne das Einschneiden eines Gewindes und zum Eintreiben in eine relativ starkes Metallelement, in dem ein Gewinde geschnitten wird, mit einem Schaft (11) mit einer Bohrspitze (12) an seinem vorderen Ende, mit einem Schraubgewinde (14) längs eines mittleren Teils desselben, mit einem Drehkopf (13) an seinem hinteren Ende und mit mehreren, im wesentlichen axialen Nuten (19) längs des mit einem Gewinde versehenen Teils der Schraube, dadurch gekennzeichnet, daß die Nuten (19) eine grob wendelförmige zur Steigung des Schraubgewindes (14) entgegengesetzte Steigung besitzen und daß die Tiefe jeder Nut größer ist als der Fuß/Spritzen-Abstand des Gewindes (14), wodurch im Gebrauch die Nuten (19) und das Gewinde (14) mit dem Verpackungsmaterial vollgepackt werden, um eine nicht mit einem Gewinde versehenes Loch durch dieses hindurch zu räumen.

2. Selbstbohrende und gewindeschneidende Schraube nach Anspruch 1, ferner dadurch gekennzeichnet, daß das Schraubgewinde (14) eine solche Form hat, bei der die Fußteile (17) breiter als die Rippen (15) sind.

3. Selbstbohrende und gewindeschneidende Schraube nach Anspruch 1 oder 2, ferner dadurch gekennzeichnet, daß das Gewinde (14) breite, flache Fußteile (17) zwischen erhöhten Teilen mit einer Breite besitzt, die in derselben Größenordnung liegt wie die Breite des erhöhten Teils des Gewindes (14).

4. Selbstbohrende und gewindeschneidende Schraube wie in irgend einem der vorhergehenden Ansprüche beansprucht, dadurch gekennzeichnet, daß sich das Schraubgewinde (14) nut über einen Teil der Strecke in Richtung auf den Drehkopf (13) erstreckt.

## Revendications

1. Vis auto-foreuse et auto-taraudeuse pour traverser une matière de garnissage relativement tendre, sans y tarauder und filetage, et pénétrer dans un élément métalique relativement solide dans lequel un filetage est taraudé, comprenant une tige (11) comportant une pointe (12) de forage à son extrémité avant, un filetage (14) le long d'une partie intermédiaire de la tige, un élément de raccord (13) pour entraînement en rotation à son extrémité arrière, et plusieurs rainures (19) généralement axiales s'étendant le long de la partie filetée de la vis, vis caractérisée en ce que les rainures (19) ont un pas hélicoïdal grossier de sens opposé à celui du filetage (14) de la vis et en ce que la profondeur de chaque rainure (19) est plus grande que la dimension, de la base à la crête, du filetage (14) de sorte que, en service, les rainures (19) et la filetage (14) s'emplissent de ladite matière de garnissage pour y percer un trou non taraudé.

2. Vis auto-foreuse et auto-taraudeuse selon la revendication 1, caractérisée en outre en ce que le filetage (14) a une forme comportant des bases (17) qui sont plus larges que les crêtes (15).

3. Vis auto-foreuse et auto-taraudeuse selon l'une des revendications 1 ou 2, caractérisée en outre en ce que le taraudage (14) comporte, entre les parties élevées, de larges bases (17) plates dont la largeur a le même ordre de grandeur que la largeur de la partie élevée du taraudage (14).

4. Vis auto-foreuse et auto-taraudeuse selon l'une quelconque des revendications précédentes, caractérisée en outre en ce que le filetage (14) s'étend sur une partie seulement du trajet menant vers le raccord (13) d'entraînement de la vis.

FIG.1.

FIG.2.